# EUROPÄISCHE PATENTSCHRIFT

(11) **EP 2 962 879 B1**
(45) Veröffentlichungstag und Bekanntmachung des Hinweises auf die Patenterteilung: **09.08.2017**
(21) Anmeldenummer: 15164638.7
(22) Anmeldetag: 22.04.2015
(51) Int. Cl.: B60H 1/34

(54) **LUFTAUSSTRÖMERANORDNUNG**
AIR VENT ARRANGEMENT
SYSTÈME D'ÉCOULEMENT D'AIR

(30) Priorität: 03.07.2014 DE 102014212981; 22.09.2014 DE 102014219081
(43) Veröffentlichungstag der Anmeldung: 06.01.2016
(73) Patentinhaber: Volkswagen Aktiengesellschaft, 38440 Wolfsburg (DE)
(72) Erfinder: Rottmann, Johannes, 38376 Süpplingenburg (DE)

(56) Entgegenhaltungen:
- EP-A1- 1 724 136
- EP-A1- 2 604 456
- WO-A1-2013/018385
- DE-A1-102012 015 748

## Beschreibung

Die Erfindung betrifft eine Luftausströmeranordnung, insbesondere für ein Kraftfahrzeug, mit einem Luftausströmer, der mindestens eine Luftleitlamelle mit einer Abströmkante und einer Anströmkante aufweist, wobei die Luftleitlamelle mit ihrer Anströmkante um eine der Abströmkante zugeordnete Drehachse verschwenkbar gelagert ist, und mit einer Dekoreinrichtung.

Luftausströmeranordnungen der Eingangs genannten Art sind aus dem Stand der Technik bekannt. So offenbart beispielsweise die Patentschrift DE 103 35 219 B3 eine Luftausströmeranordnung der gattungsgemäßen Art, welche einen Luftausströmer mit mehreren parallel zueinander angeordneten Luftleitlamellen und einer Dekoreinrichtung umfasst. Die Luftleitlamellen sind dabei in einem Gehäuse des Luftausströmers verschwenkbar gehalten, und die Dekoreinrichtung ist in Form einer Dekorblende ausgebildet und zum Verdecken des Gehäuses und zum visuellen Anpassen des Luftausströmers in den Kraftfahrzeuginnenraum ausgebildet. Dokument EP1 724 136 A1 offenbart eine Lufströmeranordnung mit einem Luftausströmer, der eine Luftleitlamelle mit einer Abströmkante und einer Anströmkante aufweist, wobei die Luftleitlaelle mit ihrer Anströmkante um eine der Abströmkante zugeordnete Drehachse verschwenkbar gelagert ist, und mit einer Dekoreinrichtung, die eine feststehende Dekorlamelle aufweist, wobei die Dekorlamelle vor der Luftleitlamelle angeordnet ist. Der Erfindung liegt die Aufgabe zugrunde, eine Luftausströmeranordnung zu schaffen, die auf einfache und kostengünstige Art und Weise eine verbesserte Integration der Luftausströmeranordnung in einen Kraftfahrzeuginnenraum ermöglicht.

Die der Erfindung zugrunde liegende Aufgabe wird durch eine Luftausströmeranordnung mit den Merkmalen des Anspruchs 1 gelöst. Diese hat den Vorteil, dass der Luftausströmer derart gut in den Kraftfahrzeuginnenraum integrierbar ist, dass der Übergang von Dekoreinrichtung zu Luftausströmer kaum ersichtlich ist. Außerdem wird es durch die erfindungsgemäße Ausbildung möglich, dass die Dekoreinrichtung selbst ebenfalls zur Luftleitung beiträgt. Die erfindungsgemäße Luftausströmeranordnung zeichnet sich dadurch aus, dass die Dekoreinrichtung mindestens eine feststehende Dekorlamelle mit einer sich in Verlängerung der Abströmkante der Luftleitlamelle erstreckenden Sichtkante aufweist, und dass die Luftleitlamelle an der Dekorlamelle um die Drehachse verschwenkbar gelagert ist. Es ist also vorgesehen, dass die Dekoreinrichtung mindestens eine Dekorlamelle aufweist, die sich in der Verlängerung der Luftleitlamelle erstreckt. Die Lamellen liegen somit in ihrer Längserstreckung nebeneinander und bevorzugt direkt aneinander an, so dass der Übergang von der einen Lamelle zu der anderen Lamelle aus einer gewissen Entfernung nicht mehr wahrnehmbar ist. Dabei ist die Luftleitelamelle direkt an der Dekorlamelle verschwenkbar gelagert. Die Dekorlamelle bildet somit ein Lagerelement für die Luftleitlamelle und ersetzt dadurch das bisher bekannte Gehäuse. Die Dekorlamelle ist beispielsweise an einem Gehäuse oder dergleichen befestigt und im Unterschied zu der Luftleitlamelle feststehend ausgebildet. Die Dekoreinrichtung imitiert somit den Luftausströmer, so dass die Integration des Luftausströmers in den Kraftfahrzeuginnenraum visuell noch besser möglich ist. Insbesondere ist dies dann der Fall, wenn die Dekorlamelle sich weit in den Kraftfahrzeuginnenraum hinein, beispielsweise entlang eines Armaturenbretts bis zu einer Mittelkonsole oder dergleichen oder bis zu einem türseitigen Abschluss des Armaturenbretts.

Gemäß einer vorteilhaften Weiterbildung der Erfindung ist vorgesehen, dass die Sichtkante und die Abströmkante einen kreissegmentförmigen, insbesondere halbkreisförmigen Querschnitt aufweisen. Die abströmseitigen Kanten der Luftleitlamelle und der Dekorlamelle sind somit abgerundet ausgebildet. Dadurch, dass die Kanten kreissegmentförmig, insbesondere halbkreissegmentförmig sind, ist es für einen Benutzer auf den ersten Blick nicht ersichtlich, ob die dazugehörige Lamelle, also die Dekorlamelle oder Luftleitlamelle, verschwenkt ist oder nicht. Darüber hinaus wird unabhängig von der Verschwenkstellung der Luftleitlamelle ein im Wesentlichen gleiches Abströmverhalten gewährleistet.

Besonders bevorzugt ist vorgesehen, dass die Sichtkante und die Abströmkante im Querschnitt den gleichen Radius zu der Drehachse aufweisen. Die kreissegmentförmige oder halbkreissegmentförmige Sichtkante und Abströmkante verlaufen somit entlang einer Fläche, die den gleichen Radius zu der Drehachse, um welche die Luftleitlamelle verschwenkbar ist, aufweisen, so dass bei einem Verschwenken der Luftleitlamelle sich kein Versatz von der Abströmkante zu der Sichtkante ergibt. Aufgrund der Kreisform mit demselben Radius und der gemeinsamen (Dreh-)Achse wird gewährleistet, dass auch bei einem Verschwenken der Luftleitlamelle die Sichtkante und Abströmkante stets zumindest abschnittsweise bündig zueinander verlaufen, so dass auch dann, wenn die Luftleitlamelleaus einer Neutralstellung (parallel zur Dekorlamelle) heraus verschwenkt wurde, dies auf den ersten Blick anhand von Abströmkante und Sichtkante nicht erkennbar ist. Dabei wird auch vermieden, dass beim Ausströmen der Luft aus dem Luftausströmer Windgeräusche am Übergang von der Luftleitlamelle zu der Dekorlamelle im Bereich der Abströmkante entstehen.

Gemäß einer vorteilhaften Weiterbildung der Erfindung ist vorgesehen, dass die Luftleitlamelle durch einen Drehbolzen an der Dekorlamelle gelagert ist. Dies stellt eine besonders einfache Drehlagerung der Luftleitlamelle zu deren Verschwenken dar. Der Drehzahlbolzen kann dabei einstückig mit der Luftleitlamelle oder mit der Dekorlamelle ausgebildet sein und in der Dekorlamelle beziehungsweise der Luftleitlamelle in einer entsprechenden Bolzenaufnahme einliegt.

Alternativ ist bevorzugt vorgesehen, dass der Drehbolzen als separates Bauteil sowohl in einer Bolzenaufnahme der Luftleitlamelle als auch der Dekorlamelle einliegt, um die Luftleitlamelle an der Dekorlamelle drehgelenkig zu lagern. Zweckmäßigerweise erstreckt sich der Drehbolzen entlang der Drehachse von einer Stirnseite der Luftleitlamelle zu der benachbarten Stirnseite der Dekorlamelle. Die Luftleitlamelle ist zweckmäßigerweise auf der der Dekorlamelle gegenüberliegenden Seite auf herkömmliche Art und Weise drehgelagert gehalten.

Ist der Drehbolzen als separates Bauteil ausgebildet, ist bevorzugt vorgesehen, dass der Drehbolzen aus Metall und die Luftleitlamelle und die Dekorlamelle aus Kunststoff gefertigt sind. Hierdurch ergibt sich der Vorteil, dass die Luftleitlamelle und die Dekorlamelle einfach herstellbar und gewichtssparend ausgebildet sind, während der Drehbolzen aus Metall auch hohen Belastungen standhält. Durch die Ausbildung aus Metall lässt sich der Drehbolzen im Vergleich zu einem Drehbolzen aus Kunststoff mit einem kleineren Durchmesser bei gleicher Belastbarkeit realisieren. Gemäß einer alternativen Ausführungsform ist vorgesehen, dass der Drehbolzen auch aus Kunststoff gefertigt ist, insbesondere bei einer einstückigen Ausbildung mit der Dekorlamelle oder der Luftleitlamelle, wodurch die Bauteilzahl verringert und die Montage vereinfacht wird.

Weiterhin ist bevorzugt vorgesehen, dass die Luftleitlamelle und die Dekorlamelle in einer Verschwenkstellung der Luftleitlamelle bündig aneinander anliegen. Insbesondere eine obere und eine untere Strömungsfläche, die die Anströmkante mit der Abströmkante verbinden, sind zumindest bereichsweise identisch zu den Oberflächen der Dekorlamelle ausgebildet, so dass in der einen, insbesondere der neutralen Schwenkstellung, die Luftleitlamelle direkt in die Dekorlamelle übergeht, beziehungsweise dass über den gesamten Umfang gesehen die Luftleitlamelle bündig zu der Dekorlamelle liegt. Hierdurch ergeben sich in der Neutralstellung beziehungsweise in der neutralen Verschwenkstellung der Luftleitlamelle besonders wenige Windgeräusche und eine optimale visuelle Integration des Luftausströmers in die Dekoreinrichtung.

Ferner ist bevorzugt vorgesehen, dass Strömungsflächen der Luftleitlamellen zumindest in Strömungsrichtung erhebungsfrei ausgebildet sind. Die obere und die untere Strömungsfläche, die von der Anströmkante zu der Abströmkante führen, sind somit in sich eben ausgebildet. Die Strömungsflächen können eine Krümmung aufweisen, die sich dann jedoch über die gesamte Strömungsfläche von der Anströmkante zu der Abströmkante erstreckt. Insbesondere kann auch vorgesehen sein, dass die Strömungsflächen parallel zueinander verlaufen. Durch die erhebungsfreie Ausbildung wird gewährleistet, dass die Strömungsflächen direkt in die Anströmkante beziehungsweise Abströmkante übergehen, so dass insbesondere im Bereich der Abströmkante keine wulstförmige Ausbildung entsteht, die einerseits strömungstechnisch ungünstig wäre und andererseits visuell wenig ansprechend ist.

Weiterhin ist bevorzugt vorgesehen, dass die Sichtkante und die Abströmkante jeweils mit einer Dekorierung versehen sind, die sich von der Luftleitlamelle und der Dekorlamelle farblich unterscheidet. Die Dekorierung betont somit die Abströmkante und die Sichtkante, wodurch der weiter hinten liegende Bereich der Dekorlamelle und der Luftleitlamelle weniger ins Auge fallen. Dadurch wird der Eindruck, dass die Dekorlamelle und die Luftleitlamelle eine durchgehende Lamelle darstellen, weiter erhöht. Insbesondere ist vorgesehen, dass die Dekorierung im Vergleich zu der Luftleitlamelle und der Dekorlamelle eine helle Farbe aufweist.

Besonders bevorzugt ist vorgesehen, dass die Sichtkante und die Abströmkante zur Dekorierung verchromt sind. Hierdurch ergibt sich ein besonders hochwertiger visueller Eindruck. Dabei ist insbesondere auch vorgesehen, dass die insbesondere aus Kunststoff gefertigten Lamellen in einer dunklen Farbe, insbesondere in Schwarz, besonders bevorzugt in einem matten Schwarz gehalten sind. Zusammen mit der halbkreisförmigen Ausbildung der Abströmkante und der Sichtkante wird dadurch der vorteilhafte Eindruck erweckt, dass die Dekorlamelle und die Luftleitlamelle, auch dann wenn die Luftleitlamelle verschwenkt wurde, eine durchgehende Gesamt-Lamelle bilden.

Weiterhin ist bevorzugt vorgesehen, dass die Dekorlamelle zumindest an einer Rückwand eines die Dekorlamelle und insbesondere auch die Luftleitlamelle aufnehmenden Gehäuses befestigt ist. Hierdurch wird eine einfache Integration der Dekorlamelle und eine sichere Befestigung dieser gewährleistet. Insbesondere ist vorgesehen, dass die Dekorlamelle einstückig mit dem Gehäuse ausgebildet ist. Alternativ können Luftleitlamelle und Dekorlamelle auch jeweils in einem eigenen Gehäuse aufgenommen sein, wobei aber bevorzugt wird die beiden Gehäuse optisch so zu gestalten, dass sie von einem Fahrzeuginsassen visuell als ein einziges Gehäuse wahrgenommen werden.

Ferner ist bevorzugt vorgesehen, dass die Luftausströmeranordnung mehrere Luftleitlamellen und Dekorlamellen aufweist, die erfindungsgemäß ausgebildet und angeordnet sind. Die Anzahl der Dekorlamellen entspricht zweckmäßigerweise der Anzahl der Luftleitlamellen, so dass jede Luftleitlamelle visuell durch eine feststehende Dekorlamelle, wie zuvor beschrieben, verlängert wird. Die jeweilige Luftleitlamelle mit der ihre Verlängerung bildenden Dekorlamelle bilden zusammen eine Gesamtlamelle, deren Dekorierung sich von der einer anderen Gesamtlamelle unterscheiden kann. Die mehreren Gesamtlamellen sind zweckmäßigerweise parallel zueinander verlaufend angeordnet/ausgebildet, um einerseits vorteilhafte Strömungsverhältnisse des Luftausströmers zu gewährleisten, und andererseits eine hohe optische Wertigkeit hervorzurufen.

Im Folgenden soll die Erfindung anhand der Zeichnung näher erläutert werden. Dazu zeigen
- Figur 1: einen Kraftfahrzeuginnenraum mit einer vorteilhaften Luftausströmeranordnung,
- Figur 2: eine vergrößerte Detailansicht der Luftausströmeranordnung gemäß einem vorteilhaften Ausführungsbeispiel,
- Figur 3: eine vereinfachte Querschnittsdarstellung der Luftausströmeranordnung und
- Figur 4: ein weiteres Ausführungsbeispiel der Luftausströmeranordnung in einer Detailansicht.

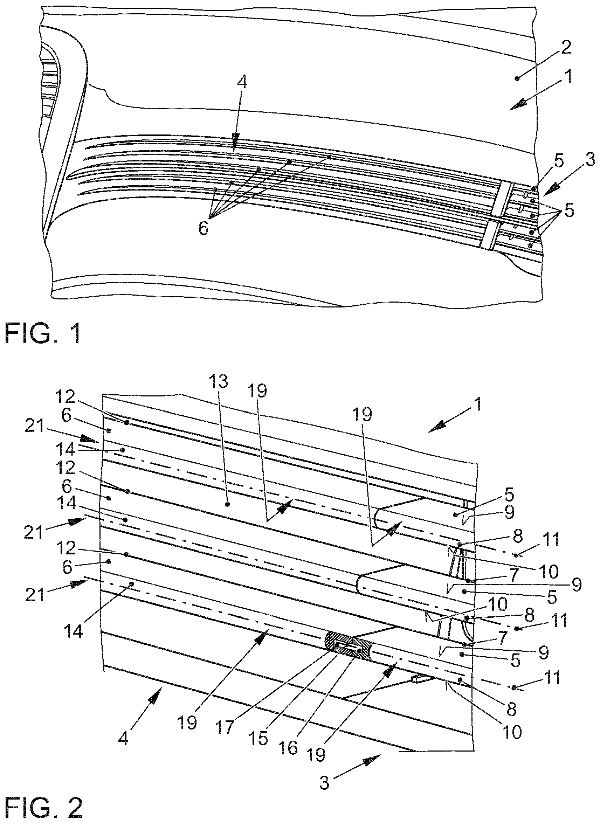

Figur 1 zeigt den Innenraum eines Kraftfahrzeugs mit einer Luftausströmeranordnung 1, die in ein Armaturenbrett 2 des Kraftfahrzeugs auf der Beifahrerseite eingesetzt ist. Die Luftausströmeranordnung 1 weist einen Luftausströmer 3 sowie eine Dekoreinrichtung 4 auf.

Der Luftausströmer 3 weist mehrere Luftleitlamellen 5 auf, die verschwenkbar gelagert sind. Die Dekoreinrichtung 4 weist der Anzahl der Luftleitlamellen 5 entsprechende Dekorlamellen 6 auf, die grundsätzlich die gleiche Form wie die Luftleitlamellen 5 aufweisen. Zu jeder Luftleitlamelle 5 erstreckt sich somit eine Dekorlamelle 6 in Verlängerung der jeweiligen Luftleitlamelle 5 entlang des Armaturenbretts 2.

Figur 2 zeigt hierzu eine vergrößerte Detailansicht der Luftausströmeranordnung 1 gemäß einem vorteilhaften Ausführungsbeispiel. Vorliegend weist der Luftausströmer 3 drei verschwenkbare Luftleitlamellen 5 auf. Jede Luftleitlamelle 5 weist eine (hintere) Anströmkante 7 und eine (vordere) Abströmkante 8 auf. Weiterhin weist jede Luftleitlamelle 5 eine obere und eine untere Strömungsfläche 9, 10 auf, die von der jeweiligen Anströmkante 7 zu der jeweiligen Abströmkante 8 führt. Die Strömungsflächen 9, 10 verlaufen vorliegend parallel und erhebungsfrei zueinander von der Anströmkante 7 zu der Abströmkante 8, so dass die Luftleitlamellen 5 insgesamt einen flachen erhebungsfreien Querschnitt aufweisen. Die Abströmkanten 8 der Luftleitlamellen 5 sind halbkreisförmig ausgebildet. Jede Luftleitlamelle 5 ist um eine Drehachse 11 verschwenkbar gelagert. Die jeweilige Drehachse 11 verläuft dabei durch die jeweilige Luftleitlamelle 5 im Bereich der Abströmkante 8, so dass die Anströmkante 7 um die Drehachse 11 herum verschwenkbar ist. Vorliegend liegt die Drehachse 11 im Mittelpunkt der halbkreisförmigen Abströmkante 8, so dass diese entlang eines Radius R zu der Drehachse 11 verläuft.

Die Dekorlamellen 6 weisen jeweils einen den Luftleitlamellen 5 entsprechenden Querschnitt auf. Im Unterschied zu den Luftleitlamellen 5 sind die Dekorlamellen 6 jedoch feststehend ausgebildet. Dazu sind die Dekorlamellen 6 an ihrer Rückseite 12 fest mit einem Gehäuse 13 verbunden. Insbesondere sind die Dekorlamellen 6 einstückig mit dem Gehäuse 13 ausgebildet. Die Dekorlamellen 6 weisen den Abströmkanten 8 entsprechende Sichtkanten 14 auf. Die Sichtkanten 14 sind somit ebenfalls halbkreisförmig ausgebildet, mit dem gleichen Radius R um die jeweilige (verlängerte) Drehachse 11. Dadurch liegt jeweils eine Sichtkante 14 bündig mit einer Abströmkante 8 nebeneinander, wie in Figur 2 gezeigt. Für einen die Luftausströmeranordnung 1 betrachtenden Fahrzeuginsassen erscheinen daher eine jeweils nebeneinander angeordnete Dekorlamelle 6 und Luftleitlamelle 5 visuell als jeweils zumindest im Wesentlichen ununterbrochen durchlaufende Einheit.

Zur drehbaren Lagerung der jeweiligen Luftleitlamellen 5 ist vorgesehen, dass ein Drehbolzen 15 vorgesehen ist, der jeweils in einer Bolzenaufnahme 16 der Luftleitlamellen 5 und in einer Bolzenaufnahme 17 der zugehörigen Dekorlamelle 6 drehbar gelagert einliegt, wie in Figur 2 in einer Teilschnittdarstellung der untersten Luftleitlamelle 5 und Dekorlamelle 6 gezeigt. Der Drehbolzen 15 ist zylinderförmig ausgebildet und bildet somit ein Drehlager für die Luftleitlamelle 5. Die Mittelachse des Drehbolzens 15 erstreckt sich zweckmäßigerweise gemäß der Drehachse 11, so dass die jeweilige Luftleitlamelle 5 entsprechend um die jeweilige Drehachse 11 herum verschwenkbar ist, wie zuvor bereits beschrieben.

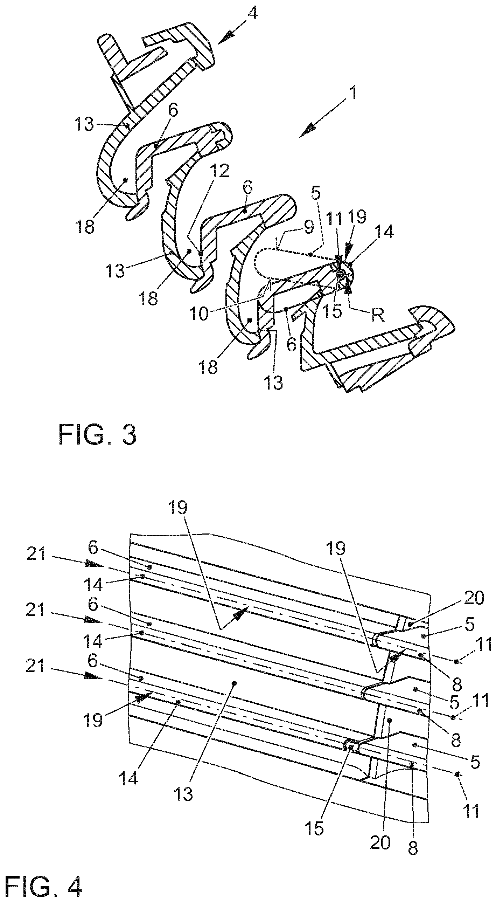

Zum besseren Verständnis zeigt Figur 3 die Luftausströmanordnung 1 in einer Querschnittsdarstellung. Gezeigt sind die drei übereinanderliegenden und feststehenden Dekorlamellen 6, die beabstandet und parallel zueinander ausgerichtet sind. Die Dekorlamellen 6 sind jeweils an dem Gehäuse 13 fest angeordnet. Das Gehäuse 13 ist dabei derart ausgebildet, dass es ausgehend von einer Dekorlamelle 6 zur nächsten Dekorlamelle 6 eine die nächste Dekorlamelle 6 hintergreifende Lichtfalle 18 aufweist, die eine Lichtabsorptionskammer bildet, in welcher einfallende Lichtstrahlen insbesondere mehrfach reflektiert und absorbiert werden. Im Bereich der untersten Dekorlamelle 6 ist außerdem eine Luftleitlamelle 5 gestrichelt dargestellt, die einen der Dekorlamelle 6 entsprechenden Querschnitt, wie zuvor bereits erwähnt, aufweist, und verschwenkt zu dieser ausgerichtet ist. Durch die vorteilhafte halbkreisförmige Ausbildung der Abströmkante 8 und der Sichtkante 14 wird erreicht, dass trotz verschwenkter Luftleitlamelle 5 die Luftleitlamelle 5 und die Dekorlamelle 6 an ihrer der Drehachse 11 zugewandten Seite/Kante bündig aneinander anliegen. Hierdurch ergeben sich einerseits strömungstechnische Vorteile, andererseits ergibt sich für den Betrachter der Eindruck, dass die Luftleitlamelle 5 und die daneben liegende Dekorlamelle 6 ineinander übergehen, unabhängig davon, in welche Richtung und wieweit die Luftleitlamelle 5 um die Drehachse 11 verschwenkt wurde.

Dieser Eindruck wird vorliegend weiter dadurch verstärkt, dass, wie in Figur 2 gezeigt, die Abströmkanten 8 und die Sichtkanten 14 von den zwei außenliegenden Dekorlamellen 6 und Luftleitlamellen 5 mit einer Dekorierung 19 in der Art einer Verchromung versehen sind. Dazu können die Abströmkanten 8 und die Sichtkanten 14 zur Verchromung beschichtet oder durch Chromteile, wie in Figur 3 angedeutet, gebildet werden. Selbstverständlich können auch alle Abströmkanten 8 und Sichtkanten 14 mit der entsprechenden Verchromung beziehungsweise Dekorierung 19 versehen sein. Sind die Luftleitlamellen 5 und die Dekorlamellen 6 im übrigen vorteilhafterweise in einer dunklen Farbe und insbesondere matt gehalten, so wird durch die Verchromung beziehungsweise die Dekorierung 19 der Eindruck erhöht, dass die nebeneinanderliegenden Luftleitlamellen 5 und Dekorlamellen 6 ineinander übergehen.

Figur 4 zeigt ein alternatives Ausführungsbeispiel der Luftausströmeranordnung 1, bei welchem zwischen den Luftleitlamellen 5 und den Dekorlamellen 6 ein Stützsteg 20 sich senkrecht zu der Längserstreckung der Lamellen 5, 6 erstreckt. In diesem Abschnitt sind die benachbarten Luftleitlamellen 5 und Dekorlamellen 6 beabstandet zueinander angeordnet, wodurch eine visuelle Trennung der Dekoreinrichtung 4 zu dem Luftausströmer 3 gebildet wird. Zweckmäßigerweise sind dabei jedoch, wie vorliegend gezeigt, die jeweilige Luftleitlamelle 5 und die in ihrer Verlängerung befindliche Dekorlamelle 6 wie zuvor beschrieben durch den Drehbolzen 15 miteinander verbunden, so dass die jeweilige Luftleitlamelle 5 um die jeweilige Drehachse 11 wie zuvor beschrieben verschwenkbar ist.

Gemäß einer vorteilhaften Weiterbildung ist vorgesehen, dass das Gehäuse 13 auch die Luftausströmer 3 trägt und insbesondere die Luftleitlamellen 5 auf der den Dekorlamellen 6 gegenüberliegenden Seite drehbar lagert. Alternativ kann jedoch vorgesehen sein, dass der Luftausströmer 3 und die Dekoreinrichtung 4 getrennt voneinander ausgebildet und erst bei der Montage zusammengefügt werden.

Insgesamt ergibt sich für den Betrachter eine Luftausströmeranordnung mit mehreren Gesamtlamellen 21, die von jeweils einer Luftleitlamelle 5 und einer in ihrer Verlängerung liegenden Dekorlamelle 6 gebildet werden, wobei sich der optische Eindruck nicht ändert, wenn die Luftleitlamellen 5 um ihre jeweilige Drehachse 11 verschwenkt sind. Die Dekorlamellen 6 wirken dabei freischwebend, was einen besonders hochwertigen Eindruck vermittelt. Vorteilhafterweise ist der jeweilige Drehbolzen 15 aus Metall gefertigt, so dass er besonders dünn realisierbar ist, wodurch die Lamellen 5, 6 wie zuvor beschrieben erhebungsfrei und vergleichsweise dünn ausgebildet sein können. Alternativ zu dem Vorsehen des separaten Drehbolzens 15 ist es jeweils auch möglich, einen Drehbolzen an einer der Lamellen 6, 5 anzuformen und insbesondere einstückig mit dieser auszubilden.

## Patentansprüche

1. Luftausströmeranordnung (1), insbesondere für ein Kraftfahrzeug, mit einem Luftausströmer (3), der mindestens eine Luftleitlamelle (5) mit einer Abströmkante (8) und einer Anströmkante (7) aufweist, wobei die Luftleitlamelle (5) mit ihrer Anströmkante (7) um eine der Abströmkante (8) zugeordnete Drehachse (11) verschwenkbar gelagert ist, und mit einer Dekoreinrichtung (4), die mindestens eine feststehende Dekorlamelle (6) aufweist, **dadurch gekennzeichnet, dass** die mindestens eine feststehende Dekorlamelle (6) eine sich in Verlängerung der Abströmkante (8) erstreckende Sichtkante (14) aufweist, und dass die Luftleitlamelle (5) an der Dekorlamelle (6) um die Drehachse (11) verschwenkbar gelagert ist.

2. Luftausströmeranordnung nach Anspruch 1, **dadurch gekennzeichnet, dass** die Sichtkante (14) und die Abströmkante (8) einen kreissegmentförmigen, insbesondere halbkreisförmigen Querschnitt aufweisen.

3. Luftausströmeranordnung nach einem der vorhergehenden Ansprüche, **dadurch gekennzeichnet, dass** die Sichtkante (14) und die Abströmkante (8) im Querschnitt den gleichen Radius zu der Drehachse (11) aufweisen.

4. Luftausströmeranordnung nach einem der vorhergehenden Ansprüche, **dadurch gekennzeichnet, dass** die Luftleitlamelle (5) durch einen Drehbolzen (15) an der Dekorlamelle (6) gelagert ist.

5. Luftausströmeranordnung nach Anspruch 4 **dadurch gekennzeichnet, dass** der Drehbolzen (5) aus Metall und die Luftleitlamelle (5) und die Dekorlamelle (6) aus Kunststoff gefertigt sind.

6. Luftausströmeranordnung nach einem der vorhergehenden Ansprüche, **dadurch gekennzeichnet, dass** die Luftleitlamelle (5) und die Dekorlamelle (6) in einer Verschwenkstellung der Luftleitlamelle (5) bündig aneinander anliegen.

7. Luftausströmeranordnung nach einem der vorhergehenden Ansprüche, **dadurch gekennzeichnet, dass** Strömungsflächen (9,10) der Luftleitlamelle (5) und der Dekorlamelle (6) zumindest in Strömungsrichtung erhebungsfrei ausgebildet sind.

8. Luftausströmeranordnung nach einem der vorhergehenden Ansprüche, **dadurch gekennzeichnet, dass** die Sichtkante (14) und die Abströmkante (8) jeweils mit einer Dekorierung (19) versehen sind, die sich farblich von der Luftleitlamelle (5) und der Dekorlamelle (6) unterscheidet.

9. Luftausströmeranordnung nach einem der vorhergehenden Ansprüche, **dadurch gekennzeichnet, dass** die Sichtkante (14) und die Abströmkante (8) zur Dekorierung verchromt sind.

10. Luftausströmeranordnung nach einem der vorhergehenden Ansprüche, **dadurch gekennzeichnet, dass** die Dekorlamelle (6) zumindest an einer Rückwand eines die Dekorlamelle (6) und insbesondere auch die Luftleitlamelle (5) aufnehmenden Gehäuses (13) befestigt ist.

11. Luftausströmeranordnung nach einem der vorhergehenden Ansprüche, **dadurch gekennzeichnet, dass** die Luftleitlamelle (5) und die Dekorlamelle (6) zusammen eine Gesamtlamelle (21) der Luftausströmeranordnung (1) bilden, und dass die Luftausströmeranordnung (1) mehrere derartiger Gesamtlamellen (21) aufweist, die parallel und beabstandet zueinander angeordnet sind.

## Claims

1. Air outlet arrangement (1), in particular for a motor vehicle, having an air outlet (3) which has at least one air guiding louvre (5) with an outflow edge (8) and an inflow edge (7), the air guiding louvre (5) being mounted by way of its inflow edge (7) such that it can be pivoted about a rotational axis (11) which is assigned to the outflow edge (8), and having a decorative device (4) which has at least one stationary decorative louvre (6), **characterized in that** the at least one stationary decorative louvre (6) has a visible edge (14) which extends as a prolongation of the outflow edge (8), and **in that** the air guiding louvre (5) is mounted on the decorative louvre (6) such that it can be pivoted about the rotational axis (11).

2. Air outlet arrangement according to Claim 1, **characterized in that** the visible edge (14) and the outflow edge (8) have a circular segment-shaped, in particular semicircular, cross section.

3. Air outlet arrangement according to either of the preceding claims, **characterized in that** the visible edge (14) and the outflow edge (8) have the same radius with respect to the rotational axis (11) in cross section.

4. Air outlet arrangement according to one of the preceding claims, **characterized in that** the air guiding louvre (5) is mounted on the decorative louvre (6) by way of a pivot pin (15).

5. Air outlet arrangement according to Claim 4, **characterized in that** the pivot pin (5) is manufactured from metal, and the air guiding louvre (5) and the decorative louvre (6) are manufactured from plastic.

6. Air outlet arrangement according to one of the preceding claims, **characterized in that** the air guiding louvre (5) and the decorative louvre (6) bear flush against one another in a pivoting position of the air guiding louvre (5).

7. Air outlet arrangement according to one of the preceding claims, **characterized in that** flow surfaces (9, 10) of the air guiding louvre (5) and of the decorative louvre (6) are configured without elevations at least in the flow direction.

8. Air outlet arrangement according to one of the preceding claims, **characterized in that** the visible edge (14) and the outflow edge (8) are provided in each case with a decoration (19), which differs in terms of colour from the air guiding louvre (5) and the decorative louvre (6).

9. Air outlet arrangement according to one of the preceding claims, **characterized in that** the visible edge (14) and the outflow edge (8) are chromed for decoration purposes.

10. Air outlet arrangement according to one of the preceding claims, **characterized in that** the decorative louvre (6) is fastened at least to a rear wall of a housing (13) which receives the decorative louvre (6) and, in particular, also the air guiding louvre (5).

11. Air outlet arrangement according to one of the preceding claims, **characterized in that** the air guiding louvre (5) and the decorative louvre (6) together form a complete louvre (21) of the air outlet arrangement (1), and **in that** the air outlet arrangement (1) has a plurality of complete louvres (21) of this type which are arranged parallel to one another and are spaced apart from one another.

## Revendications

1. Système d'écoulement d'air (1), en particulier pour un véhicule automobile, comprenant un dispositif d'écoulement d'air (3) qui présente au moins une lamelle de guidage d'air (5) avec une arête de fuite (8) et une arête d'attaque (7), la lamelle de guidage d'air (5) étant supportée avec son arête d'attaque (7) de manière à pouvoir pivoter autour d'un axe de rotation (11) associé à l'arête de fuite (8), et comprenant un dispositif décoratif (4) qui présente au moins une lamelle décorative fixe (6), **caractérisé en ce que** l'au moins une lamelle décorative fixe (6) présente une arête visible (14) s'étendant dans le prolongement de l'arête de fuite (8), et **en ce que** la lamelle de guidage d'air (5) est supportée de manière à pouvoir pivoter autour de l'axe de rotation (11) sur la lamelle décorative (6).

2. Système d'écoulement d'air selon la revendication 1, **caractérisé en ce que** l'arête visible (14) et l'arête de fuite (8) présentent une section transversale en forme de segment de cercle, en particulier en forme de segment de demi-cercle.

3. Système d'écoulement d'air selon l'une quelconque des revendications précédentes, **caractérisé en ce que** l'arête visible (14) et l'arête de fuite (8) présentent, en section transversale, le même rayon par rapport à l'axe de rotation (11).

4. Système d'écoulement d'air selon l'une quelconque des revendications précédentes, **caractérisé en ce que** la lamelle de guidage d'air (5) est supportée sur la lamelle décorative (6) par un pivot (15).

5. Système d'écoulement d'air selon la revendication 4, **caractérisé en ce que** le pivot (5) est fabriqué en métal et la lamelle de guidage d'air (5) et la lamelle décorative (6) sont fabriquées en plastique.

6. Système d'écoulement d'air selon l'une quelconque des revendications précédentes, **caractérisé en ce que** la lamelle de guidage d'air (5) et la lamelle décorative (6) s'appliquent l'une contre l'autre en affleurement dans une position pivotée de la lamelle de guidage d'air (5).

7. Système d'écoulement d'air selon l'une quelconque des revendications précédentes, **caractérisé en ce que** des surfaces d'écoulement (9, 10) de la lamelle de guidage d'air (5) et de la lamelle décorative (6) sont réalisées sans rehaussements au moins dans la direction d'écoulement.

8. Système d'écoulement d'air selon l'une quelconque des revendications précédentes, **caractérisé en ce que** l'arête visible (14) et l'arête de fuite (8) sont chacune pourvues d'une décoration (19) qui se distingue de par sa couleur de la lamelle de guidage d'air (5) et de la lamelle décorative (6).

9. Système d'écoulement d'air selon l'une quelconque des revendications précédentes, **caractérisé en ce que** l'arête visible (14) et l'arête de fuite (8) sont chromées en tant que décoration.

10. Système d'écoulement d'air selon l'une quelconque des revendications précédentes, **caractérisé en ce que** la lamelle décorative (6) est fixée au moins à une paroi arrière d'un boîtier (13) recevant la lamelle décorative (6) et notamment également la lamelle de guidage d'air (5).

11. Système d'écoulement d'air selon l'une quelconque des revendications précédentes, **caractérisé en ce que** la lamelle de guidage d'air (5) et la lamelle décorative (6) forment ensemble une lamelle totale (21) du système d'écoulement d'air (1) et **en ce que** le système d'écoulement d'air (1) présente plusieurs telles lamelles totales (21) qui sont disposées parallèlement et à distance les unes des autres.
